# EUROPÄISCHE PATENTSCHRIFT

(11) **EP 2 644 839 B1**
(45) Veröffentlichungstag und Bekanntmachung des Hinweises auf die Patenterteilung: **04.07.2018**
(21) Anmeldenummer: 12161157.8
(22) Anmeldetag: 26.03.2012
(51) Int. Cl.: F01D 19/00, F02C 7/26, F02C 9/18, F04D 27/02

(54) **Gasturbinenstart mit Frequenzumformer**
Gas turbine start with frequency converter
Démarrage de turbines à gaz avec convertisseur de fréquence

(43) Veröffentlichungstag der Anmeldung: 02.10.2013
(73) Patentinhaber: General Electric Technology GmbH, 5400 Baden (CH)
(72) Erfinder: Oesterheld, Joerg, 5452 Oberrohrdorf (CH); Hoffmann, Jürgen, 5417 Untersiggenthal (CH)
(74) Vertreter: General Electric Technology GmbH

(56) Entgegenhaltungen:
- EP-A2- 0 963 035
- EP-A2- 1 343 247
- EP-A2- 1 990 520
- EP-A2- 2 410 154
- US-A1- 2002 070 716
- US-A1- 2004 178 640

## Beschreibung

### TECHNISCHES GEBIET

Die vorliegende Erfindung bezieht sich auf das Gebiet der Kraftwerkstechnik. Sie betrifft ein Verfahren zum Betrieb einer Gasturbinenanlage mit elektronischer Frequenzwandlung zwischen Generator und Netz sowie eine Gasturbinenanlage zur Durchführung eines derartigen Verfahrens.

### STAND DER TECHNIK

Grosse Kraftwerksanlagen mit Leistungen im Bereich von mehr als 100 MW, bei denen ein Strom erzeugender Generator von einer Turbine angetrieben wird und die erzeugte elektrische Leistung in ein Netz mit vorgegebener Netzfrequenz (z.B. 50 oder 60 Hz) einspeist, haben üblicherweise eine feste Kopplung zwischen der (mechanischen) Drehzahl der Turbine und der Netzfrequenz. Der Ausgang des Generators ist dabei über eine Netzverbindung frequenzstarr mit dem Netz verbunden und der Generator ist direkt an die Gasturbine angekoppelt. Bei kleineren Kraftwerksanlagen wird der Generator von der Turbine über ein mechanisches Getriebe drehzahlgekoppelt angetrieben. Mittels Getriebe sind nur feste Übersetzungsverhältnisse zwischen einer Turbinendrehzahl und einer Netzfrequenz realisierbar.

Zum Start werden Gasturbinen typischerweise von dem Generator, der als Motor angesteuert und betrieben wird, beschleunigt bis die Selbsterhaltungsdrehzahl der Gasturbine überschritten ist. Die Selbsterhaltungsdrehzahl der Gasturbine ist dabei die minimale Drehzahl, bei der die von der Turbine abgegebene Leistung reicht um die Gasturbine in Betrieb zu halten. Oberhalb der Selbsterhaltungsdrehzahl wird die Speisung des Generators abgeschaltet und der Generator elektrisch vom Netz getrennt. Die Gasturbine beschleunigt aus eigener Kraft bis zu einer Nenndrehzahl. Bei grossen herkömmlichen Gasturbinen, die direkt über den Generator an das elektrische Netz gekoppelt werden, entspricht diese Drehzahl der Netzfrequenz. Bei Gasturbinen mit Getriebe entspricht die Nenndrehzahl der Netzfrequenz multipliziert mit dem Drehzahlverhältnis des Getriebes.

Nach Erreichen der Nenndrehzahl der kann der Generator synchronisiert und Leistung an das elektrische Netz abgegeben werden. Zur Synchronisation wird die Gasturbine typischerweise zunächst auf eine leichte Überdrehzahl gegenüber der Netzfrequenz gebracht, als nächstes die Drehzahl reduziert bis die Abweichung in Drehzahl und Phasenverschiebung zulässige Abweichungen zur Synchronisation unterschreiten und dann synchronisiert. Dieser Vorgang ist relativ zeitaufwendig und kann in der Grössenordnung von einigen Sekunden bis Minuten in Anspruch nehmen.

Ausserdem führt der Synchronisationsvorgang zu unnötigen Transienten in den Heissgas- und Abgastemperaturen der Turbine. Oberhalb der Selbsterhaltungsdrehzahl steigt die Leistung, die eine Gasturbine abgeben kann mit der Drehzahl. Bei konstanter Heissgastemperatur führt die Leistungszunahme im letzten Teil des Startvorgangs zu einer immer schnelleren Beschleunigung der Gasturbine. Um die Gasturbine auf Nenndrehzahl einzuregeln muss die Leistungsabgabe der Turbine reduziert werden, was durch eine Reduktion der Heissgastemperatur erfolgt. Nach Synchronisation ans Netz wird typischerweise aufgelastet, wozu die Heissgastemperatur wieder angehoben wird.

Die Offenlegungsschrift US 2004/0178640 A1 beschreibt ein weiteres Startverfahren einer Gasturbinenanlage.

### DARSTELLUNG DER ERFINDUNG

Die vorliegende Erfindung bezieht sich auf ein Verfahren nach Anspruch 1 zum schnellen Start eines Gasturbinenkraftwerkes. Weiterhin sollen transiente thermische Belastungen der Turbine reduziert werden. Ausserdem ist eine Kraftwerksanlage nach Anspruch 10, die zur Ausführung des Verfahrens geeignet ist, Gegenstand der Erfindung. Eine Kraftwerksanlage zur Ausführung des Verfahren umfasst eine Gasturbine, einen mit der Gasturbine gekoppelten Generator und einen Frequenzumformer, der zur Einspeisung von Strom in ein elektrisches Netz mit einer Netzfrequenz verbindbar ist.

Als Start einer Gasturbine ist das Hochfahren der Gasturbine ab Stillstand bis zur Synchronisation mit einem elektrischen Netz zu verstehen.

Das offenbarte Verfahren zum Start einer Kraftwerksanlage zeichnet sich dadurch aus, dass der Generator vor Erreichen der Nenndrehzahl der Gasturbine über den Frequenzumformer an das elektrische Netz angeschlossen wird, wobei der Frequenzumformer so angesteuert wird, dass er einen Ausgangsstrom mit der Netzfrequenz erzeugt.

Damit kann schon vor Erreichen der Nenndrehzahl der Gasturbine elektrische Leistung an das elektrische Netz abgegeben werden. Diese elektrische Leistung wird bevorzugt direkt über den Aufspanntransformator an das elektrische Netz abgegeben.

Als Nenndrehzahl oder Auslegungsdrehzahl ist die Drehzahl zu verstehen, mit der die Gasturbine im Lastbetrieb betrieben wird. Bei grossen Gasturbinen ist dies typischerweise die Netzfrequenz d.h. 50 Hz oder 60 Hz entsprechend 3000 U/min oder 3600 U/min. Bei der Verwendung von Frequenzumformern kann die mechanische Nennfrequenz oder Nenndrehzahl der Turbine um einen Übersetzungsfaktor von der synchronen Drehzahl zum Netz abweichen, wie das auch bei der Verwendung von einem Getriebe der Fall ist, somit wären beispielsweise Nenndrehzahlen von 3000 U/min für die Einspeisung in ein 60 Hz Netz oder 3600 U/min für die Einspeisung in ein 50 Hz Netz möglich, aber auch davon abweichende Drehzahlen können realisiert werden. Für Gasturbinen mittlerer Leistung mit Frequenzumformer wird der Übersetzungsfaktor von mechanischer Frequenz zu Netzfrequenz deutlich grösser als 1 sein, typischerweise in einem Bereich von 2 bis 5.

Nach einer Ausführungsform des Verfahrens wird der Generator bereits bei einer Drehzahl, die kleiner als 90% der Betriebsdrehzahl der Gasturbine ist, über den Frequenzumformer an das elektrische Netz angeschlossen, um elektrische Leistung an das Netz abzugeben.

Typischerweise werden zum Start der Gasturbine Abblasventile des Verdichters geöffnet, um einen Strömungsabriss in dem Verdichter bei niedrigen Drehzahlen zu verhindern. Diese Abblasventile können bereits vor Erreichen der Nenndrehzahl, beispielsweise zwischen 70% und 90% der Nenndrehzahl, geschlossen werden. Typischerweise wird der Generator über den Frequenzumformer an das elektrische Netz angeschlossen nachdem die Abblasventile der Gasturbine geschlossen sind. Nach einer Ausführungsform des Verfahrens wird der Generator über den Frequenzumformer an das elektrische Netz angeschlossen, sobald die Abblasventile der Gasturbine geschlossen sind.

Typischerweise liegt die Selbsterhaltungsdrehzahl einer Gasturbine zwischen 40% und 60% der Nenndrehzahl. Ab einer Drehzahl die etwa 10% bis 20% über der Selbsterhaltungsdrehzahl liegt, wird die Leistung der Turbine deutlich grösser, als die zum Antrieb des Verdichters und Überwindung von Reibungsverlusten usw. nötige Leistung, so dass die Gasturbine selber den Wellenstrang beschleunigen kann und zusätzlich nutzbare Leistung abgegeben werden kann. Nach einer Ausführungsform des Verfahrens wird der Generator über den Frequenzumformer an das elektrische Netz angeschlossen wird, sobald die Gasturbine eine Drehzahl zwischen 70% und 85% der Netzfrequenz erreicht hat.

Nach einer weiteren Ausführungsform wird mit einer Gasturbine, die eine Nenndrehzahl von 3000 U/min hat über einen Frequenzumformer Strom in ein Netz mit einer Netzfrequenz von 60 Hz eingespeist. Insbesondere bei dieser Anwendung wird der Generator über den Frequenzumformer an das elektrische Netz angeschlossen, sobald die Gasturbine eine Drehzahl zwischen 70% und 85% der Netzfrequenz erreicht hat.

Nach einer weiteren Ausführungsform des Verfahrens wird der Generator in einem ersten Schritt zum Andrehen der Gasturbine über einen Anfahrtransformator und eine statische Anfahrvorrichtung als Motor betrieben. In einem zweiten Schritt wird der Generator von der statischen Anfahrvorrichtung getrennt und in einem dritten Schritt über den Frequenzumformer zur Abgabe von elektrischer Leistung an das Netz angeschlossen.

Nach einer Ausführungsform des Verfahren wird der Generator zum Andrehen der Gasturbine als Motor betrieben, bis die Selbsterhaltungsdrehzahl der Gasturbine überschritten ist.

In einer weiteren Ausführungsform wird der Generator zum Andrehen der Gasturbine von dem Netz über den Frequenzumformer mit Strom versorgt und als Motor betrieben, bis die Gasturbinenleistung die erforderliche Leistung zur Beschleunigung des Wellenstrangs überschreitet. Sobald die Gasturbinenleistung die erforderliche Leistung zur Beschleunigung des Wellenstrangs überschreitet, wird über den gleichen Frequenzumformer elektrische Leistung an das Netz abgegeben.

In einer alternativen Ausführungsform des Verfahrens wird der Generator zum Andrehen der Gasturbine von dem Netz über den Frequenzumformer mit Strom versorgt und als Motor betrieben, bis die Gasturbinenleistung die erforderliche Leistung zur Beschleunigung des Wellenstrangs überschreitet. Sobald die Gasturbinenleistung die erforderliche Leistung zur Beschleunigung des Wellenstrangs plus einen Schwellenwert überschreitet, wird über den Frequenzumformer elektrische Leistung an das Netz abgegeben. Der Schwellenwert ist beispielsweise die Minimalleistung der Kraftwerksanlage. Eine Minimalleistung ist definiert, um eine Einspeisung von elektrischer Leistung in das Netz sicherzustellen und Leistungsrückfluss in den Generator zu verhindern. Die Minimalleistung ist beispielsweise in der Grössenordnung von einem halben bis zwei Prozent der Nennleistung des Generators.

Typischerweise wird der Drehzahlgradient der Gasturbine während des Starts beim Hochfahren auf einen maximalen Wert geregelt, sobald die überschüssige Leistung gross genug ist, um diesen maximalen Drehzahlgradienten zu realisieren. Dieser maximale Drehzahlgradient ist typischerweise von der Drehzahl abhängig und wird vor Erreichen der Nenndrehzahl klein, um starkes Überschwingen der Drehzahl über die Nenndrehzahl zu verhindern und um ein stabiles Einregeln auf die Nenndrehzahl zu erleichtern. Der Drehzahlgradient wird dabei typischerweise durch die Heissgastemperatur geregelt. Um eine zu hohe Beschleunigung vor Erreichen der Nenndrehzahl zu vermeiden, muss die Heissgastemperatur deutlich reduziert werden. Um die damit verbunden thermischen Belastungen der Gasturbine und eine Verzögerung des Auflasten der Gasturbine zu vermeiden, wird die Beschleunigung der Gasturbine über die an das Netz abgegeben Leistung geregelt, sobald der Generator über den Frequenzumformer elektrische Leistung an das Netz abgibt, womit ein Einregeln auf Nenndrehzahl ohne nennenswerte Schwankungen der Heissgastemperatur möglich ist.

Um einen stabile Leistungsabgabe und Regelung zu gewährleisten, wird der Frequenzumformer nach einer Ausführung des Verfahrens so angesteuert, dass der Generator er ab dem Augenblick, an dem mit dem Netz verbunden ist, eine elektrische Leistung an das Netz abgibt, die mindestens ein Prozent 1% der Nennleistung der Gasturbine ist.

Neben dem Verfahren ist eine Kraftwerksanlage zur Durchführung des Verfahrens Gegenstand der Offenbarung. Eine derartige Kraftwerksanlage umfasst eine Gasturbine mit einem Abblasventil zum Ausblasen von Luft aus dem Verdichter beim Anfahren der Gasturbine, einen mit der Gasturbine gekoppelten Generator und einen Frequenzumformer, der mit einem elektrischen Netz verbindbar ist. Die Kraftwerksanlage zeichnet sich dadurch aus, dass der Frequenzumformer einen Regler umfasst, der beim Start der Kraftwerksanlage nach Schliessen des Abblasventils und vor Erreichen der Nenndrehzahl der Gasturbine den Frequenzumformer so ansteuert, dass er einen Ausgangsstrom mit der Netzfrequenz erzeugt. Dies erlaubt es, den Generator mit dem elektrischen Netz zu verbinden und Leistung an das Netz abzugeben, bevor die Gasturbine ihre Nenndrehzahl erreicht hat.

Nach einer Ausführungsform kann Frequenzumformer über einen Aufspanntransformator an das Netz verbunden sein. Nach einer weiteren Ausführung kann der Frequenzumformer mit dem Aufspanntransformator, der im Lastbetrieb zur Leistungsübertragung an das elektrische Netz verwendet wird, vom Netz versorgt werden, um den Generator als Motor anzusteuern.

Nach einer weiteren Ausführungsform ist zwischen Frequenzumformer und Netz ein Starttransformator angeordnet, der Strom von dem Netz auf eine Startspannung transformiert, die tiefer als die Spannung bei Lastbetrieb des Generators ist. Ausgehend von einem Wechselstrom mit Netzfrequenz und der Startspannung wird der Generator von dem Frequenzumformer als Motor angesteuert. Insbesondere kann der Frequenzumformer wahlweise für den Lastbetrieb über den Aufspanntransformator oder für den Start über den Starttransformator mit dem Netz verbunden werden.

Nach einer bevorzugten Ausführung ist zwischen Frequenzumformer und Netz ein Generatorleistungsschalter, ein Aufspanntransformator und ein Netzhochspannungstransformator zur Leistungsabgabe an das Netz angeordnet und parallel zu dem ein Generatorleistungsschalter ein Starttransformator und ein Anfahr-Schalter zur Leistungsaufnahme angeordnet sind. Zum Start der Gasturbine kann damit elektrische Leistung von dem Netz über den Generatorleistungsschalter, den Aufspanntransformator, den Starttransformator und den Anfahr-Schalter zu dem Frequenzumformer geleitet werden.

### KURZE ERLÄUTERUNG DER FIGUREN

Die Erfindung soll nachfolgend für Ausführungsbeispiele anhand der Zeichnung näher erläutert werden. Es zeigen
- Fig. 1: ein stark vereinfachtes Schaltbild eines Kombikraftwerkes mit einer Gasturbine, einem Generator mit Frequenzumformer und einem nachgeschalteten Wasser-Dampfkreislauf;
- Fig. 2: einen stark vereinfachten Ausschnitt aus einem einpoligen Schema (Single Line Diagram) gemäss einem Ausführungsbeispiel der Erfindung mit Frequenzumformer und statischer Anfahrvorrichtung;
- Fig. 3: einen stark vereinfachten Ausschnitt aus einem Einliniendiagram einer Kraftwerksanlage gemäss einem Ausführungsbeispiel der Erfindung mit Frequenzumformer zur Stromeinspeisung in das Netz und zur Ansteuerung des Generators als Motor;
- Fig. 4: einen stark vereinfachten Ausschnitt aus einem Einliniendiagram einer Kraftwerksanlage gemäss einem Ausführungsbeispiel der Erfindung mit zwei Transformatoren zwischen Frequenzumformer und Netz;
- Fig. 5: den beispielhaften Aufbau eines Matrixumrichters, wie er als elektronischer Frequenzumformer in einer Anlage nach einer der Figuren 1 bis 4 zum Einsatz kommen kann;
- Fig. 6: beispielhaft den Verlauf von wichtigen Prozessgrössen bei einem Gasturbinenstart;
- Fig. 7: beispielhaft den Verlauf von wichtigen Prozessgrössen bei einem erfindungsgemässen Gasturbinenstart; und
- Fig. 8: beispielhaft den Verlauf von wichtigen Prozessgrössen bei einem erfindungsgemässen Gasturbinenstart ohne Trennung des Frequenzumformers ab Andrehen der Gasturbine.

### WEGE ZUR AUSFÜHRUNG DER ERFINDUNG

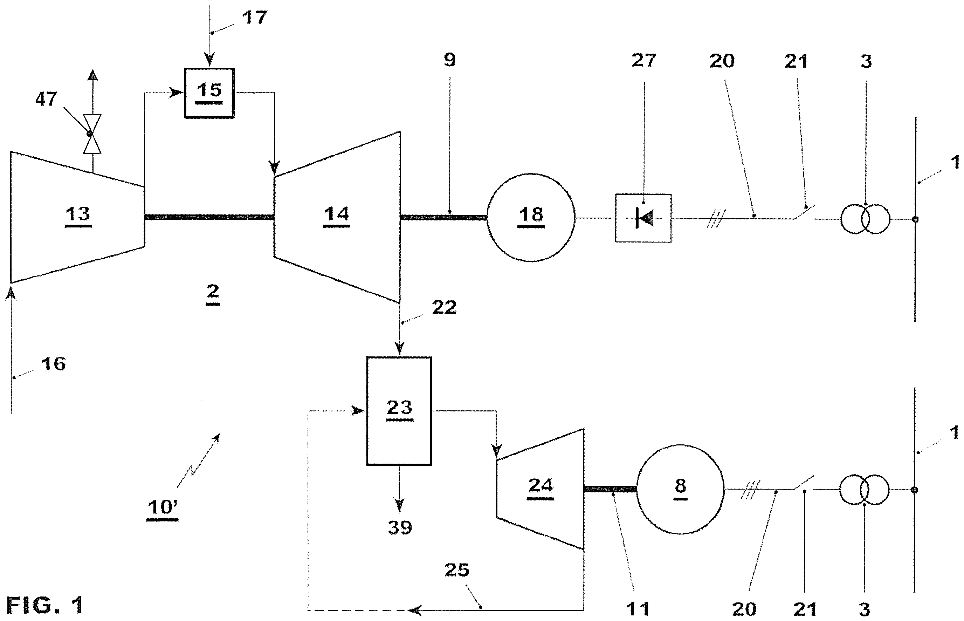

Fig. 1 zeigt in einer stark vereinfachten Darstellung eine Kraftwerksanlage 10, die mittels einer Gasturbine 2 mit angekoppeltem ersten Generator 18 und einer Dampfturbine 24 mit angekoppeltem zweiten Generator 8 Strom erzeugt und in ein Netz 1 einspeist. Die Gasturbine 2 und der Generator 18 sind durch eine gemeinsame Welle verbunden und bilden einen Wellenstrang 9. Die Gasturbine 2 umfasst im einfachsten Fall einen Verdichter 13, der über einen Lufteinlass 16 Verbrennungsluft ansaugt und verdichtet. Der Verdichter 13 kann aus mehreren hintereinander geschalteten Teilverdichtern zusammengesetzt sein, die auf steigendem Druckniveau arbeiten und ggf. eine Zwischenkühlung der verdichteten Luft ermöglichen. Die im Verdichter 13 verdichtete Verbrennungsluft gelangt in eine Brennkammer 15, in die über eine Brennstoffzufuhr 17 flüssiger (z.B. Öl) oder gasförmiger (z.B. Erdgas) Brennstoff eingedüst und unter Verbrauch von Verbrennungsluft verbrannt wird. Weiter weisst die Gasturbine ein Abblasventil 47 auf, über das während des Starts der Gasturbine, typischerweise bis zu einer Drehzahl zwischen 70% und 90% der Nenndrehzahl der Gasturbine, Luft aus mindestens einer Zwischenstufe des Verdichters 13 abgeblasen wird, um einen Strömungsabriss aufgrund der tiefen Geschwindigkeit im Verdichter 13 zu verhindern. Die Luft wird beispielsweise in die Umgebung oder über eine nicht gezeigte Leitung in die Abgasleitungen der Gasturbine abgeblasen.

Die aus der Brennkammer 15 austretenden heissen Gase werden in einer nachfolgenden Turbine 14 unter Arbeitsleistung entspannt und treiben so den Verdichter 13 und den angekoppelten ersten Generator 18 an. Das beim Austritt aus der Turbine noch relativ heisse Abgas wird durch einen nachfolgenden Abhitzedampferzeuger 23 geschickt, um in einem separaten Wasser-Dampf-Kreislauf 25 Dampf für den Betrieb einer Dampfturbine 24 zu erzeugen. Kondensator, Speisewasserpumpe und weitere Systeme des Wasser-Dampfkreislaufes 25 sind zur Vereinfachung der Darstellung nicht gezeigt. Eine solche Kombination von Gasturbinen- und Dampfkraftwerk wird als Kombikraftwerk bezeichnet. Die Dampfturbine 24 kann dabei mit dem ersten Generator 18 auf der der Turbine 14 gegenüberliegenden Seite gekoppelt sein. Gasturbine 2, ersten Generator 18 und Dampfturbine 24 bilden dann einen sogenannten "Single Shaft Power Train". Die Dampfturbine 24 kann aber auch, so wie in Fig. 1 gezeigt, einen eigenen zweiten Generator 8 auf einem separaten Wellenstrang 11 antreiben. Für Mehrwellenanlagen sind verschiedene Kombinationen bekannt. Beispielsweise sind sogenannte 2 auf 1 Anordnungen, in denen eine Dampfturbine 24 auf einem Wellenstrang 11 mit einem zweiten Generator 8 durch zwei Gasturbinen 2 nachgeschalteten Abhitzedampferzeuger 23 mit Dampf versorgt wird, weit verbreitet. Dabei sind die Gasturbinen 2 jeweils auf einem Wellenstrang 9 mit eigenem ersten Generator 18 angeordnet. Analog gibt es auch Anordnungen in denen der Dampf von drei oder mehr Gasturbinen 2 nachgeschalteten Abhitzedampferzeuger 23 für den Antrieb einer Dampfturbine 24 genutzt wird.

Bei der 1-Wellen-Gasturbine der Fig. 1 steht die Drehzahl der Gasturbine 2 in einem festen Verhältnis zur im ersten Generator 18 erzeugten Frequenz der Wechselspannung. Um die Gasturbine 2 unabhängig von der Netzfrequenz betreiben zu können ist der Generator über einen Frequenzumformer 27 an das Netz 1 verbunden. Da die Netzspannung typischerweise höher als die Generatorspannung ist, kann weiter ein Aufspanntransformator zwischen Frequenzumformer 27 und Netz 1 vorgesehen sein. Der Frequenzumformer 27 erlaubt es, die Gasturbine 2 bzw. den Generator 18 schon vor Erreichen ihrer Nenndrehzahl an das Netz 1 zu verbinden und über den Aufspanntransformator 3 elektrische Leistung in das Netz 1 einzuspeisen. Bei entsprechender Schaltung kann der Frequenzumformer 27 auch dafür genutzt werden, den Generator 18 zum Start der Gasturbine 2 als Motor zu betreiben.

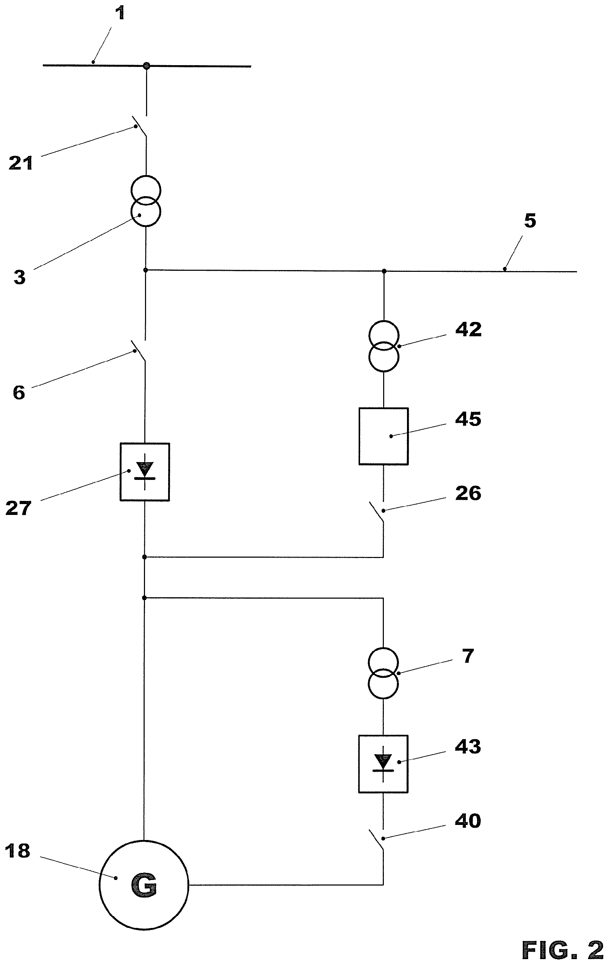

In Fig. 2 ist ein stark vereinfachter Ausschnitt aus einem Single Line Diagram einer ersten Ausführungsform des erfindungsgemässen Kraftwerks dargestellt. Diese erlaubt eine Einspeisung elektrischer Leistung in das Netz 1, bevor die Gasturbine die Nenndrehzahl erreicht hat. Es zeigt einen von mindestens einer Turbine angetrieben herkömmlichen Generator 18, dessen Ausgangsleistung über ein Kraftwerksnetz 5 übertragen wird. Das Kraftwerksnetz 5 beinhaltet Hochspannungsleitungen und einen Generatorleistungsschalter 6 mit dem der Generator 18 von dem Kraftwerknetz 5 getrennt werden kann. Der vom Generator 18 erzeugte Strom wird über eine Netzverbindung 20, einen Aufspanntransformator 3 und einen Netzhochspannungsschalter 21 in das Netz 1 eingespeist. Typischerweise wird das kraftwerkseigene Stromnetz, das aus einem Mittelspannungsnetz und einem von diesem versorgten Niederspannungsnetz besteht, über einen Hilfstransformator und einen Hochspannungsschalter von dem Kraftwerksnetz 5 aus versorgt (nicht gezeigt).

Der Generatorerregerstrom wird von dem Kraftwerksnetz 5 abgenommen, über einen Erregertransformator 7 auf Erregerspannung transformiert und in einem statischen Erreger 43 gleichgerichtet und geregelt. Durch einen Erregerschalter 40 kann die Erregung zu- oder abgeschaltet werden.

Um den Generator 18 zum Start der Gasturbine als Motor zu schalten wird der Generator 18 mit Strom von dem Kraftwerksnetz 5 über einen Anfahrtransformator 42 und über eine statische Anfahrvorrichtung (Static Frequency Converter) 45 mit Strom versorgt. Die statische Anfahrvorrichtung 45 kann über einen Anfahrschalter 26 dem Generator 18 zugeschaltet bzw. von ihm getrennt werden.

Im Normalbetrieb wird die Frequenz des vom Generator 18 erzeugten Stroms in dem Frequenzumformer 27 auf die Netzfrequenz umgeformt. Dies erlaubt einen flexibleren Betrieb der Gasturbine. Insbesondere erlaubt der Frequenzumformer eine elektrische Verbindung des Generators 18 mit dem Netz 1, bevor der Generator 18 seine Betriebsdrehzahl erreicht hat. Dies kann erfolgen, sobald der die Gasturbine 2 ihre Selbsterhaltungsdrehzahl überschritten hat, der Anfahrschalter 26 geöffnet wurde und die Erregung des Generators 18 über den Erregungsschalter 40 eingeschaltet wurde. Typischerweise ist die Erregerspannung tiefer, als die des Kraftwerksnetzes 5, weshalb ein Erregertransformator 7 zur Stromversorgung der statischen Erregung 43 vorgesehen werden kann.

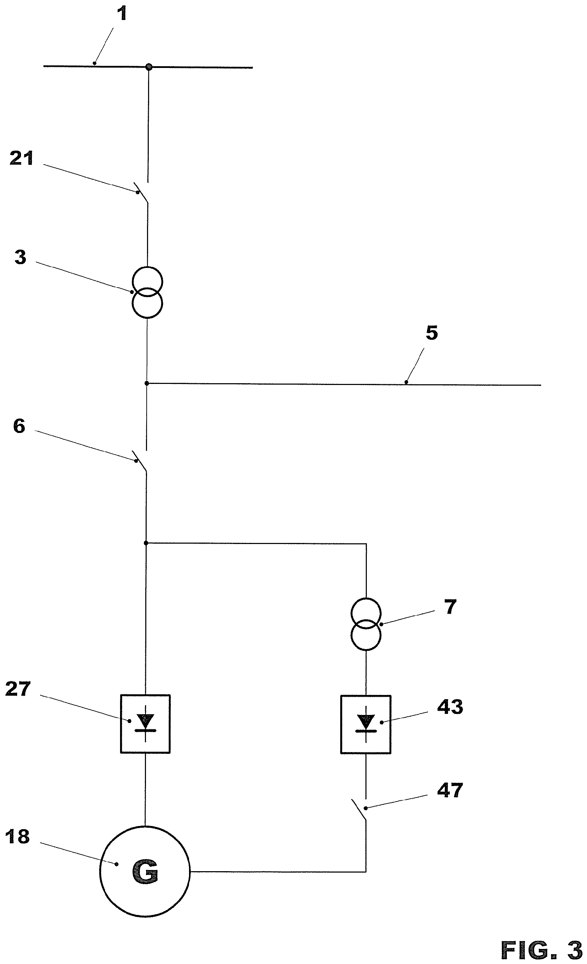

In Fig. 3 ist eine zweite Ausführungsform des erfindungsgemässen Kraftwerks dargestellt. Das in Fig. 3 gezeigte Ausführungsbeispiel basiert auf dem der Fig. 2. In dieser Ausführung wurde aber auf eine statische Anfahrvorrichtung 45 zum Start der Gasturbine 2 verzichtet. Für den Start wird der Frequenzumformer 27 zum Ansteuern des Generators 18 als Motor genutzt. Dazu wird in dieser Ausführung der Frequenzumformer 27 bei Motorbetrieb des Generators 18 direkt von dem Aufspanntransformator 3 mit Strom aus dem Netz 1 versorgt.

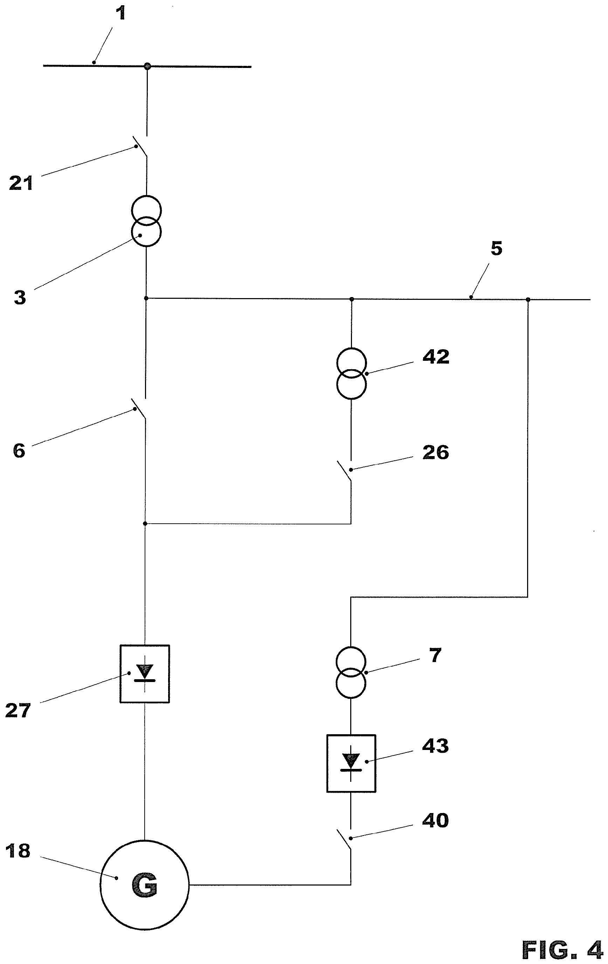

In Fig. 4 ist eine weitere Ausführungsform des erfindungsgemässen Kraftwerks dargestellt. Je nach Auslegung des Frequenzumformers 27 und Spannung vor dem Aufspanntransformator 3 kann der Frequenzumformers 27 nicht unmittelbar zur Ansteuerung des Generators 18 als Motor benutzt werden. Um den Frequenzumformer 27 zum Start mit Strom auf einem niedrigeren Spannungsniveau zu versorgen, ist in dieser Ausführung ein Anfahrtransformator 42 (auch Starttransformator genannt) und ein Anfahrschalter 26 vorgesehen. Während des Starts ist der Netzhochspannungsschalter 21 geschlossen. Über den Aufspanntransformator 3 und den Anfahrtransformator 42 wird der Frequenzumformer 27 mit Strom geeigneter Spannung versorgt, um den Generator 18 als Motor zu betreiben. Sobald keine Generator- Motorleistung mehr zum Andrehen der Gasturbine benötigt wird, kann der Anfahr- Schalter 26 geöffnet werden. Anschliessend wird bei Erreichen der notwendigen Freigaben der Generator 18 erregt und es kann über den Frequenzumformer 27, den Generatorschalter 6, den Aufspanntransformator 3 und den Netzhochspannungsschalter 21 elektrische Leistung an das Netz 1 abgeben werden.

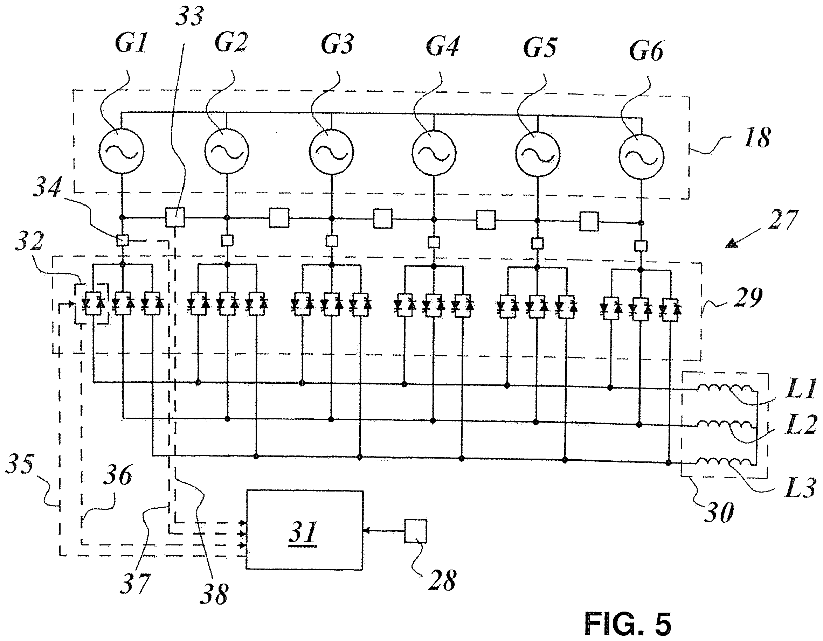

Verschiedene Arten von Frequenzumformern 27 sind bekannt. Ein beispielhafter Aufbau eines Matrixumrichters, wie er als elektronischer Frequenzumformer 27 in einer Anlage nach den Fig. 1 bis 4 zum Einsatz kommen kann, ist in Fig. 5 gezeigt.

Der elektronische Frequenzumformer 27 ist - um die Verlustleistung zu begrenzen - vorzugsweise als Matrixumrichter ohne Gleichstromzwischenkreis ausgebildet. Ein solcher Matrixumrichter, der aufgrund seiner Ansteuerung besonders verlustarm arbeitet, ist in der EP-A2-1 199 794 im Aufbau und in der Wirkungsweise beschrieben worden. Weitere Ausführungen zu einem solchen Matrixumrichter sind in der EP-A1-1 561 273, in der DE-A1-10 2004 016 453, der DE-A1-10 2004 016 463 und der DE-A1-10 2004 016 464 gemacht worden. In Fig. 5 ist das Prinzipschaltbild eines Matrixumrichters mit 6 Eingangsphasen und 3 Ausgangsphasen dargestellt. Der Matrixumrichter 27 verbindet in einer zeitlichen Abfolge 6 Phasen G1,..,G6 eines Generators 8, 18 als Quelle mit 3 Phasen L1,..,L3 einer Last 30. Der dazu benötigte Leistungsteil 29 umfasst 18 bidirektionale Schalter 32 in Form von antiparallel geschalteten Thyristoren (im allgemeinen Fall gibt es m x n Schalter für m Eingangs/Quellen-Phasen und n Ausgangs/Last-Phasen). Die Schalter 32 sind in einer (6 x 3)-Matrix angeordnet. Für die Ansteuerung der Schalter 32 ist eine Steuerung oder ein Regler 31 vorgesehen, der von einem Taktgeber 28 Zeitsignale (eine Taktfrequenz) erhält. Der Schaltzustand der Schalter 32 (EIN, AUS) wird überwacht und jeweils über eine erste Signalleitung 36 an den Regler 31 gemeldet. Die Schalter 32 werden von dem Regler 31 jeweils über eine Steuerleitung 35 angesteuert.

In den einzelnen Phasen G1,..,G6 des Generators 8, 18 ist jeweils eine Strommesseinrichtung 34 angeordnet, die das Vorzeichen des Phasenstromes über eine zweite Signalleitung 37 an den Regler 31 meldet. Weiterhin sind zwischen den Phasen G1,..,G6 des Generators 8, 18 Spannungsmesseinrichtungen 33 angeordnet, die das Vorzeichen der jeweiligen Phasendifferenzspannung über eine dritte Signalleitung 38 an den Regler 31 melden. Zu den Einzelheiten des Betriebsablaufs des Matrixumrichters wird auf die o.g. Druckschriften verwiesen.

Andere Frequenzumformertypen sind ebenfalls geeignet für die erfindungsgemässe Anwendung, wobei ein hoher Wirkungsgrad des Frequenzumformers für die Anwendung von Vorteil ist.

In den gezeigten Beispielen ist der Frequenzumformer als von dem Generator getrennte Vorrichtung dargestellt. Alternativ kann der Frequenzumformer auch in den Generator integriert sein oder der Frequenzumformer kann die Ausgangsfrequenz des Generators 18 durch eine geregelte Drehfeld-Erregerfrequenz der Rotorwicklungen eingestelltgeregelt werden.

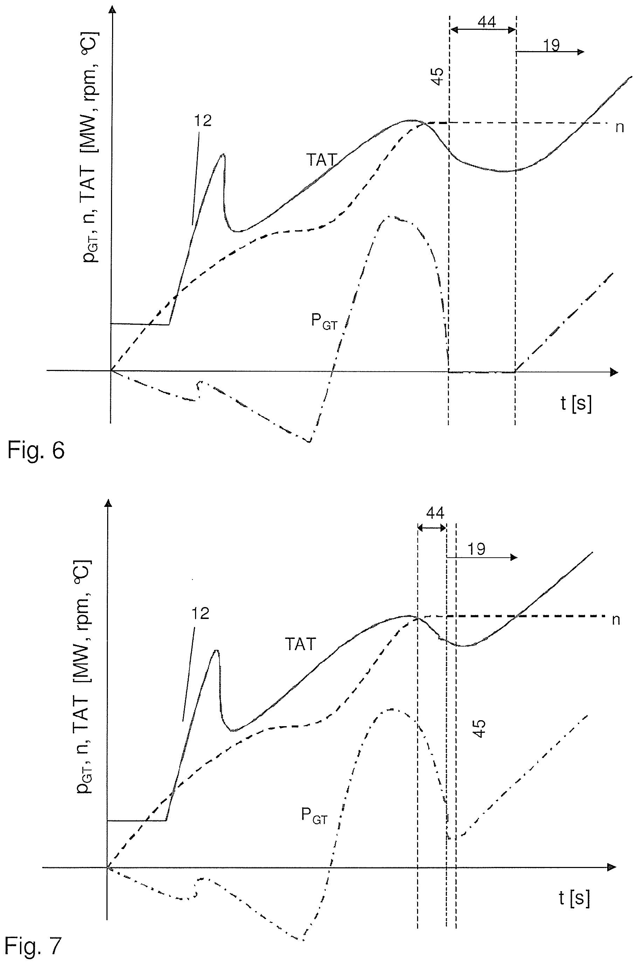

Fig. 6 zeigt beispielhaft den Verlauf von wichtigen Prozessgrössen bei einem Gasturbinenstart ohne Frequenzumformer 27. Zur Veranschaulichung des Starts sind die Drehzahl n, die Turbinenaustrittstemperatur TAT und die Leistung der Gasturbine P_{GT} über der Zeit dargestellt. Während des Hochlaufens bis zur Nenndrehzahl ist als Leistung der Gasturbine P_{GT} die Summe aus Nettogeneratorleistung und der Beschleunigungsleistung des Wellenstranges 9. Eine negative Nettogeneratorleistung ist dabei die Leistung, die der Generator im Motorbetrieb abgibt. Bei dem Andrehen der Gasturbine von Stillstand, d.h. von einer Drehzahl n gleich 0 U/min ist Beschleunigungsleistung zunächst gleich der Leistung des als Motor betriebenen und ggf. über eine separate Starterregung erregten Generators 18. Mit zunehmender Drehzahl wird die Leistungsaufnahme des Verdichters grösser, weshalb die Beschleunigung reduziert wird und die Leistung der Gasturbine P_{GT} fällt. Sobald die Zündung 12 in der Brennkammer 15 erfolgt, steigt die Turbinenaustrittstemperatur TAT steil an bis die TAT-Regelung die Brennstoffzufuhr stabilisiert und die Gasturbine wird stärker beschleunigt. Daher steigt die Leistung der Gasturbine P_{GT} kurzfristig an, bevor sie weiter fällt. Nach Überschreiten der Selbsterhaltungsdrehzahl und nach Schliessen der Abblasventile steigt die Leistung der Gasturbine P_{GT} steil an. Die statische Anfahrvorrichtung 45 kann typischerweise ab 60% bis 80% der Nenndrehzahl der Gasturbine 2 ausgeschaltet werden und die Gasturbine beschleunigt ohne den Antrieb des Generators alleine weiter. Um ein stabiles Einregeln der Drehzahl n auf Nenndrehzahl zu gewährleisten, wird der Gradient der Drehzahl (Beschleunigung) typischerweise begrenzt. Ein Drehzahlregler kommt zum Eingriff und die Turbinenaustrittstemperatur TAT wird reduziert. Sobald die Nenndrehzahl erreicht ist, wird die Drehzahl n stabilisiert und der Generator 18 kann synchronisiert werden. Erst nach dieser relativ zeitaufwendigen Stabilisierung und Synchronisation 44 kann mit dem Auflasten 19 der Gasturbine begonnen werden, wofür die Turbinenaustrittstemperatur TAT angehoben wird. Ab Synchronisation 44 wird die Gasturbine 2 mit konstanter Drehzahl n betrieben und die Gasturbinenleistung P_{GT} ist gleich der Leistung des Generators 18.

Zur Synchronisation 44 wird die Gasturbine 2 beispielsweise auf leichte (d.h. bis zu maximal 1 oder 2%) Überdrehzahl gegenüber dem Netz 1 gebracht (aufgrund des Massstabes nicht in Fig. 6 dargestellt), eine Synchronisationsvorrichtung übernimmt die Kontrolle der Gasturbine 2 bis die Frequenz des Generators 18 phasengleich mit der Frequenz des Netzes 1 ist. Sobald die Frequenz und Spannung des Generators 18 denen des Netzes 1 entsprechen, gibt sie den Befehl den Generatorschalter 6 zu schliessen. Während dieses Prozesses ist eine negative Leistung zu vermeiden, weil sonst der Generator 18 sofort automatisch vom Netz 1 getrennt wird.

Die Turbinenaustrittstemperatur TAT ist äquivalent für die Heissgastemperatur. Beide werden typischerweise über eine Brennstoffzufuhr 17 geregelt. Um die Gasturbine 2 auf Nenndrehzahl zu stabilisieren, muss die Gasturbinenleistung P_{GT} gegenüber der Beschleunigungsphase deutlich reduziert werden. Dafür ist die ist Turbinenaustrittstemperatur TAT und damit auch die Heissgastemperatur zu reduzieren. Für einen schnellen Start wird die Turbinenaustrittstemperatur TAT so hoch wie möglich gewählt. Die Reduktion der Turbinenaustrittstemperatur TAT zur Stabilisierung der Drehzahl n und anschliessende Anhebung der Turbinenaustrittstemperatur TAT beim Auflasten 19 der Gasturbine 2 führt zu transienten Temperaturänderungen und kann einen zusätzlichen Lebensdauerverbrauch infolge der damit verbunden Thermospannungen zur Folge haben.

Fig. 7 zeigt den beispielhaften Verlauf der wichtigen Prozessgrössen aus Fig. 6 für eine Ausführungsform des erfindungsgemässen Verfahren. Der Start verläuft bis kurz vor Erreichen der Nenndrehzahl der Gasturbine 2 identisch zu dem in Fig. 6 gezeigtem Start. Sobald die statische Anfahrvorrichtung 45 zwischen 60% bis 80% der Nenndrehzahl der Gasturbine 2 ausgeschaltet ist, kann die statische Erregung 43 des Generators 18 eingeschaltet werden. Schon vor Erreichen der Nenndrehzahl kann der Generator 18 über den Frequenzumformer 27 synchron mit dem Netz verbunden werden. Eine konventionelle Synchronisation ist nicht erforderlich. Mit eingeschaltetem Frequenzumformer geht die Turbine in Leistungsregelung. Beispielsweise kann sie zur weiteren Beschleunigung bis Nenndrehzahl mit einer Minimalleistung als Sollwert geregelt werden. Die Regelung des Frequenzumformers übernimmt die Drehzahlregelung der Turbine. Die Einregelung auf Nenndrehzahl der Gasturbine 2 erfolgt über diese Regelung. Diese wird so geregelt, dass die vorher zur Beschleunigung verwendete positive Leistung der Gasturbine P_{GT} an das Netz 1 abgegeben wird, d.h. die Beschleunigung quasi bei Erreichen der Nenndrehzahl "abgebremst" wird. Unmittelbar anschliessend kann das Auflasten erfolgen.

Da die Gasturbine zur Synchronisation 44 nicht erst eine Leerlaufphase durchfahren muss, sondern direkt Leistung an das Netz 1 abgibt, kann die Turbinenaustrittstemperatur TAT auf einem höheren Niveau gehalten werden. Idealerweise können auf transiente Änderungen der Turbinenaustrittstemperatur TAT beim Synchronisieren 44 ganz verzichtet werden.

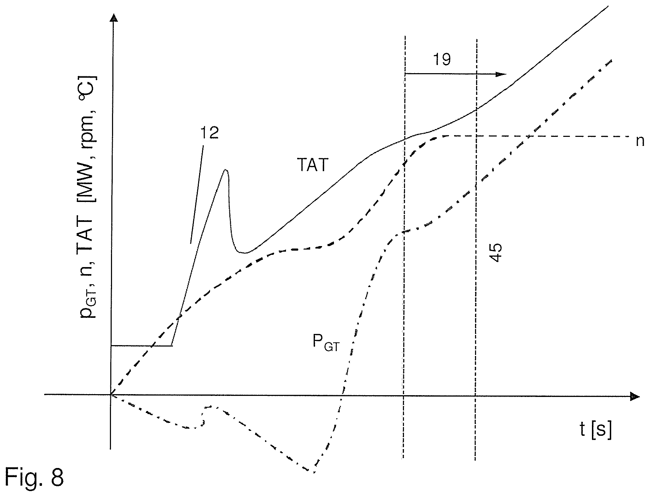

Fig. 8 zeigt den beispielhaften Verlauf der wichtigen Prozessgrössen für eine weitere Ausführungsform des erfindungsgemässen Verfahren. In diesem Beispiel erfolgt der Gasturbinenstart ohne Trennung des Frequenzumformers 27 vom Netz 1 nach Andrehen der Gasturbine 2. Die Gasturbine 2 wird von dem als Motor von dem Frequenzumformer 27 angesteuerten Generator 18 angedreht. Dazu ist der Generatorschalter 6 ab Stillstand geschlossen. Bei dem erfindungsgemässen Gasturbinenstart ohne Trennung des Frequenzumformers ab Andrehen der Gasturbine bleibt der Generatorschalter 6 geschlossen. Sobald die Gasturbine ausreichend Leistung zur Beschleunigung des Wellenstrangs erzeugt, kann die Ansteuerung des Frequenzumformers so geregelt werden, dass der Generator keine Leistung mehr abgibt. Mit zunehmender Drehzahl n wird der Frequenzumformer 27 so geregelt, dass Leistung an das Netz abgegeben wird. Ein Auflasten 19 beginnt dabei bereits vor erreichen der Nenndrehzahl der Gasturbine 2. Über die zunehmende Leistungsabgabe wird die Gasturbinendrehzahl n so geregelt, dass sie sich bei der Nenndrehzahl stabilisiert. Eine transiente Reduktion der Turbinenaustrittstemperatur TAT kann somit ganz vermieden werden. Mit zunehmender Leistung ist ein weiterer Anstieg der Turbinenaustrittstemperatur TAT gezeigt. Dieser korrespondiert zu einer verbesserten Kühlung mit steigenden Druckverhältnissen.

Die möglichen Ausführungen der Erfindung sind nicht auf die hier dargestellten Beispiele beschränkt. Anhand der Beispiele eröffnen sich dem Fachmann eine Vielzahl von Möglichkeiten äquivalente Schaltungen und Verfahren zu realisieren. Insbesondere bei der Anordnung von Schaltern, Transformatoren Leitungen ist eine grosse Anzahl von Kombinationen möglich. Zur Vereinfachung sind ausserdem Sicherheitsschalter und ein grosser Teil der Hilfssysteme nicht dargestellt. Weiter ist die Anwendung nicht auf die hier gezeigte Art oder Kombination beschränkt. Insbesondere ist die Anwendung ist nicht auf den Einsatz in Kombikraftwerken beschränkt. Eine Anwendung für reine Gasturbinenkraftwerke ist ebenfalls möglich. Weiter ist die Anwendung nicht auf Gasturbinen mit einfacher Brennkammer, wie sie in Fig. 1 gezeigt ist beschränkt, sondern kann ohne Einschränkung auch für Gasturbinen mit sequentieller Verbrennung, wie sie beispielsweise aus der EP0718470 bekannt sind, angewendet werden.

In den angegebenen Beispielen ist ein Kesselspülen des Abhitzedampferzeugers 23 nicht gezeigt. Dies ist für Anlagen mit Abhitzedampferzeugers 23 typischerweise vor Zünden der Gasturbine erforderlich. Die Gasturbine wird dafür auf eine Spüldrehzahl gebracht und mit Frischluft gespült, bis sicher gestellt ist, dass alle explosiven Brennstoffgemische aus dem Abhitzedampferzeuger 23 gespült sind. Sobald dies der Fall ist, wird wie beschrieben angefahren.

Weiter kann auch die Drehzahl der Dampfturbine 24 mit Verwendung eines elektronischen Frequenzumformers unabhängig von der Netzfrequenz des Netzes 1 geregelt werden und in diesem Fall auch der Selbstanlauf der Dampfturbine durch den vorhandenen Frequenzumformer mit dem Generator im Motorbetrieb unterstützt werden.

### BEZUGSZEICHENLISTE

- 1: Netz
- 2: Gasturbine
- 3: Aufspanntransformator
- 4: Starttransformator
- 5: Kraftwerksnetz
- 6: Generatorleistungsschalter
- 7: Erregertransformator
- 8: Dampfturbinengenerator
- 9: Wellenstrang
- 10: Kraftwerksanlage
- 11: Wellenstrang der Dampfturbine
- 12: Zündung
- 13: Verdichter
- 14: Turbine
- 15: Brennkammer
- 16: Lufteinlass
- 17: Brennstoffzufuhr
- 18: Generator
- 19: Auflasten
- 20: Netzverbindung (frequenzgekoppelt)
- 21: Netzhochspannungsschalter
- 22: Gasturbinenabgas
- 23: Abhitzedampferzeuger
- 24: Dampfturbine
- 25: Wasser-Dampf-Kreislauf
- 26: Anfahr- Schalter
- 27: Elektronischer Frequenzumformer
- 28: Taktgeber
- 29: Leistungsteil
- 30: Last
- 31: Regler
- 32: Schalter (bidirektional)
- 33: Spannungsmesseinrichtung
- 34: Strommesseinrichtung
- 35: Steuerleitung
- 36,..,38: Signalleitung
- 39: Abgas
- 40: Erregerschalter
- 41: Start- Netzhochspannungsschalter
- 42: Anfahrtransformator
- 43: statische Erregung
- 44: Synchronisation
- 45: statische Anfahrvorrichtung
- 46: Nenndrehzahl erreicht
- 47: Abblasventil

- G1,..,G6: Phase (Generator)
- L1,..,L3: Phase (Last)
- n: Drehzahl
- t: Zeit
- TAT: Turbinenaustrittstemperatur
- P_{GT}: Leistung der Gasturbine

## Patentansprüche

1. Verfahren zum Start einer Kraftwerksanlage (10) umfassend eine Gasturbine (2), einen mit der Gasturbine (2) gekoppelten Generator (18) und einen Frequenzumformer, der mit einem elektrischen Netz (1) zur Einspeisung von Strom mit einer Netzfrequenz verbindbar ist,
**dadurch gekennzeichnet, dass** bei einem Start der Gasturbine (2) der Frequenzumformer (27) vor Erreichen der Nenndrehzahl der Gasturbine (2) so angesteuert wird, dass er einen Ausgangsstrom mit der Netzfrequenz erzeugt und der Generator (18) über den Frequenzumformer (27) mit dem elektrischen Netz (1) verbunden wird, vor Erreichen der Nenndrehzahl der Gasturbine elektrische Leistung von dem Generator (18) an das elektrische Netz (1) abgegeben wird und dass die Beschleunigung der Gasturbine durch Regelung der an das Netz (1) abgegeben Leistung geregelt wird, sobald der Generator (18) über den Frequenzumformer (27) elektrische Leistung an das Netz (1) abgibt.

2. Verfahren zum Start einer Kraftwerksanlage (10) nach Anspruch 1, **dadurch gekennzeichnet, dass** der Generator (18) bei einer Drehzahl, die kleiner als 90% der Betriebsdrehzahl der Gasturbine (2) ist, über den Frequenzumformer (27) an das elektrische Netz (1) angeschlossen wird.

3. Verfahren zum Start einer Kraftwerksanlage (10) nach Anspruch 2, **dadurch gekennzeichnet, dass** der Generator (18) über den Frequenzumformer (27) an das elektrische Netz (1) angeschlossen wird, sobald die Gasturbine eine Drehzahl zwischen 70% und 85% der Netzfrequenz erreicht hat.

4. Verfahren zum Start einer Kraftwerksanlage (10) nach Anspruch 1, **dadurch gekennzeichnet, dass** der Generator (18) über den Frequenzumformer (27) an das elektrische Netz (1) angeschlossen wird, sobald Abblasventile (47) der Gasturbine geschlossen sind.

5. Verfahren zum Start einer Kraftwerksanlage (10) nach einem der Ansprüche 1 bis 4, **dadurch gekennzeichnet, dass** der Generator (18) zum Andrehen der Gasturbine (2) als Motor betrieben wird bis die Selbsterhaltungsdrehzahl der Gasturbine überschritten ist.

6. Verfahren zum Start einer Kraftwerksanlage (10) nach Anspruch 5, **dadurch gekennzeichnet, dass** der Generator (18) zunächst zum Andrehen der Gasturbine (2) über einen Anfahrtransformator und eine statische Anfahrvorrichtung (63) als Motor betrieben wird, der Generator (18) von der statischen Anfahrvorrichtung (63) getrennt wird und der Generator (18) dann über den Frequenzumformer (27) zur Abgabe von elektrischer Leistung an das Netz (1) angeschlossen wird.

7. Verfahren zum Start einer Kraftwerksanlage (10) nach Anspruch 5, **dadurch gekennzeichnet, dass** der Generator (18) zum Andrehen der Gasturbine (2) von dem Netz (1) über den Frequenzumformer (27) mit Strom versorgt und als Motor betrieben wird bis die Gasturbinenleistung die erforderliche Leistung zur Beschleunigung des Wellenstrangs (9) überschreitet, und nachdem die Gasturbinenleistung die erforderliche Leistung zur Beschleunigung des Wellenstrangs (19) überschreitet, über den Frequenzumformer (27) elektrische Leistung an das Netz (1) abgegeben wird.

8. Verfahren zum Start einer Kraftwerksanlage (10) nach Anspruch 5, **dadurch gekennzeichnet, dass** der Generator (18) zum Andrehen der Gasturbine (2) von dem Netz (1) über den Frequenzumformer (27) mit Strom versorgt und als Motor betrieben wird bis die Gasturbinenleistung die erforderliche Leistung zur Beschleunigung des Wellenstrangs (19) überschreitet, und sobald die Gasturbinenleistung die erforderliche Leistung zur Beschleunigung des Wellenstrangs (19) plus einen Schwellenwert überschreitet, über den Frequenzumformer (27) elektrische Leistung an das Netz (1) abgegeben wird.

9. Verfahren zum Start einer Kraftwerksanlage (10) nach einem der Ansprüche 1 bis 8, **dadurch gekennzeichnet, dass** der Frequenzumformer (27) so angesteuert wird, dass der Generator er ab dem Augenblick, an dem mit dem Netz (1) verbunden ist eine elektrische Leistung an das Netz (1) abgibt, grösser oder gleich einem Prozent 1% der Nennleistung der Gasturbine (2) ist.

10. Kraftwerksanlage (10) umfassend eine Gasturbine (2) mit einem Abblasventil (47) zum Ausblasen von Luft aus dem Verdichter (13) beim Anfahren der Gasturbine (2), einen mit der Gasturbine (2) gekoppelten Generator (18) und einen Frequenzumformer (27), der mit einem elektrischen Netz (1) verbindbar ist, **dadurch gekennzeichnet, dass** der Frequenzumformer (27) einen Regler (31) umfasst, der beim Start der Kraftwerksanlage (10) nach Schliessen des Abblasventils (47) und vor Erreichen der Nenndrehzahl der Gasturbine (2) den Frequenzumformer (27) so ansteuert, dass er einen Ausgangsstrom mit der Netzfrequenz erzeugt, um den Generator (18) mit dem elektrischen Netz (1) zu verbinden und um elektrische Leistung vor Erreichen der Nenndrehzahl der Gasturbine an das elektrische Netz (1) abzugeben wobei die Beschleunigung der Gasturbine durch Regelung der an das Netz (1) abgegeben Leistung geregelt wird, sobald der Generator (18) über den Frequenzumformer (27) elektrische Leistung an das Netz (1) abgibt.

11. Kraftwerksanlage (10) nach Anspruch 10, **dadurch gekennzeichnet, dass** zwischen Frequenzumformer (27) und Netz (1) ein Aufspanntransformator (3) angeordnet ist.

12. Kraftwerksanlage (10) nach Anspruch 10, **dadurch gekennzeichnet, dass** zwischen Frequenzumformer (27) und Netz (1) ein Generatorleistungsschalter (6), ein Aufspanntransformator (3) und ein Netzhochspannungstransformator (21) zur Leistungsabgabe an das Netz (1) angeordnet sind und parallel zu dem ein Generatorleistungsschalter (6) ein Starttransformator (4) und ein Anfahr-Schalter (26) zur Leistungsaufnahme zum Start der Gasturbine (2) angeordnet sind.

## Claims

1. Method for the start of a power plant installation (10) comprising a gas turbine (2), a generator (18) coupled to the gas turbine (2), and a frequency convertor, which is connectable to an electrical grid (1) to feed current with a grid frequency,
**characterized in that**, during a start of the gas turbine (2), the frequency convertor (27) is controlled before the nominal rotational speed of the gas turbine (2) is reached, such that it generates an output current with the grid frequency and the generator (18) is connected to the electrical grid (1) via the frequency convertor (27), electrical power is output to the electrical grid (1) by the generator (18) before the nominal rotational speed of the gas turbine is reached and that the acceleration of the gas turbine is controlled by controlling the power output to the grid (1) as soon as the generator (18) outputs electrical power to the grid (1) via the frequency convertor (27).

2. Method for the start of a power plant installation (10) according to Claim 1, **characterized in that** the generator (18) is connected to the electrical grid (1) via the frequency convertor (27) at a rotational speed less than 90 % of the operating rotational speed of the gas turbine (2).

3. Method for the start of a power plant installation (10) according to Claim 2, **characterized in that** the generator (18) is connected to the electrical grid (1) via the frequency convertor (27) as soon as the gas turbine has reached a rotational speed between 70 % and 85 % of the grid frequency.

4. Method for the start of a power plant installation (10) according to Claim 1, **characterized in that** the generator (18) is connected to the electrical grid (1) via the frequency convertor (27) as soon as discharge valves (47) of the gas turbine are closed.

5. Method for the start of a power plant installation (10) according to one of Claims 1 to 4, **characterized in that** the generator (18) is operated as a motor to start rotation of the gas turbine (2) until the self-sustaining rotational speed of the gas turbine is exceeded.

6. Method for the start of a power plant installation (10) according to Claim 5, **characterized in that** the generator (18) is initially operated as a motor to start rotation of the gas turbine (2) via a start-up transformer and a static start-up device (63), the generator (18) is separated from the static start-up device (63), and the generator (18) is then connected via the frequency convertor (27) for the output of electrical power to the grid (1).

7. Method for the start of a power plant installation (10) according to Claim 5, **characterized in that** the generator (18) is supplied with current from the grid (1) via the frequency convertor (27) and is operated as a motor to start rotation of the gas turbine (2) until the gas turbine power exceeds the power necessary for acceleration of the shaft train (9), and, once the gas turbine power exceeds the power necessary for acceleration of the shaft train (19), electrical power is output to the grid (1) via the frequency convertor (27) .

8. Method for the start of a power plant installation (10) according to Claim 5, **characterized in that** the generator (18) is supplied with current from the grid (1) via the frequency convertor (27) and is operated as a motor for initial rotation of the gas turbine (2) until the gas turbine power exceeds the power necessary for acceleration of the shaft train (19), and, as soon as the gas turbine power exceeds the power necessary for acceleration of the shaft train (19) plus a threshold value, electrical power is output to the grid (1) via the frequency convertor (27).

9. Method for the start of a power plant installation (10) according to one of Claims 1 to 8, **characterized in that** the frequency convertor (27) is controlled such that the generator, from the moment at which it is connected to the grid (1), outputs to the grid (1) an electrical power greater than or equal to one percent (1 %) of the nominal power of the gas turbine (2).

10. Power plant installation (10) comprising a gas turbine (2) with a discharge valve (47) for blowing out air from the compressor (13) when starting up the gas turbine (2), a generator (18) coupled to the gas turbine (2), and a frequency convertor (27), which is connectable to an electrical grid (1), **characterized in that** the frequency convertor (27) comprises a controller (31), which, during the start of the power plant installation (10) once the discharge valve (47) has been closed and before the nominal rotational speed of the gas turbine (2) is reached, controls the frequency convertor (27) such that it generates an output current with the grid frequency in order to connect the generator (18) to the electrical grid (1) and in order to output electrical power to the electrical grid (1) before the nominal rotational speed of the gas turbine is reached, wherein the acceleration of the gas turbine is controlled by controlling the power output to the grid (1) as soon as the generator (18) outputs electrical power to the grid (1) via the frequency convertor (27).

11. Power plant installation (10) according to Claim 10, **characterized in that** a step-up transformer (3) is arranged between the frequency convertor (27) and the grid (1).

12. Power plant installation (10) according to Claim 10, **characterized in that** a generator circuit breaker (6), a step-up transformer (3) and a grid high-voltage transformer (21) are arranged between the frequency convertor (27) and the grid (1) in order to output power to the grid (1), and a starting transformer (4) and a start-up switch (26) are arranged parallel to the generator circuit breaker (6) for power consumption for the start of the gas turbine (2).

## Revendications

1. Procédé de démarrage d'une centrale électrique (10) comprenant une turbine à gaz (2), un générateur (18) couplé à la turbine à gaz (2) et un convertisseur de fréquence qui peut être relié à un réseau électrique (1) pour injecter de l'électricité à une fréquence de réseau,
**caractérisé en ce que** lors d'un démarrage de la turbine à gaz (2), le convertisseur de fréquence (27) est piloté avant que la vitesse de rotation nominale de la turbine à gaz (2) soit atteinte de telle sorte qu'il génère un courant de sortie ayant la fréquence nominale et le générateur (18) est relié au réseau électrique (1) par le biais du convertisseur de fréquence (27) pour que de l'énergie électrique soit délivrée par le générateur (18) au réseau électrique (1) avant que la vitesse de rotation nominale de la turbine à gaz soit atteinte, et **en ce que** l'accélération de la turbine à gaz est régulée par la régulation de l'énergie délivrée au réseau (1) dès que le générateur (18) délivre de l'énergie électrique au réseau (1) par le biais du convertisseur de fréquence (27).

2. Procédé de démarrage d'une centrale électrique (10) selon la revendication 1, **caractérisé en ce que** le générateur (18) est raccordé au réseau électrique (1) par le biais du convertisseur de fréquence (27) à une vitesse de rotation qui est inférieure à 90 % de la vitesse de rotation de service de la turbine à gaz (2).

3. Procédé de démarrage d'une centrale électrique (10) selon la revendication 2, **caractérisé en ce que** le générateur (18) est raccordé au réseau électrique (1) par le biais du convertisseur de fréquence (27) dès que la turbine à gaz a atteint une vitesse de rotation comprise entre 70 % et 85 % de la fréquence du réseau.

4. Procédé de démarrage d'une centrale électrique (10) selon la revendication 1, **caractérisé en ce que** le générateur (18) est raccordé au réseau électrique (1) par le biais du convertisseur de fréquence (27) dès que les soupapes de décharge (47) de la turbine à gaz sont fermées.

5. Procédé de démarrage d'une centrale électrique (10) selon l'une quelconque des revendications 1 à 4, **caractérisé en ce que** le générateur (18) fonctionne comme un moteur pour amorcer la rotation de la turbine à gaz (2) jusqu'à ce que la vitesse de rotation d'autoconservation de la turbine à gaz soit dépassée.

6. Procédé de démarrage d'une centrale électrique (10) selon la revendication 5, **caractérisé en ce que** le générateur (18) fonctionne tout d'abord comme un moteur pour amorcer la rotation de la turbine à gaz (2) par le biais d'un transformateur de démarrage et d'un dispositif de démarrage statique (63), le générateur (18) est déconnecté du dispositif de démarrage statique (63) et le générateur (18) est ensuite raccordé par le biais du convertisseur de fréquence (27) en vue de délivrer de l'énergie électrique au réseau (1).

7. Procédé de démarrage d'une centrale électrique (10) selon la revendication 5, **caractérisé en ce que** le générateur (18), pour amorcer la rotation de la turbine à gaz (2), est alimenté en électricité depuis le réseau (1) par le biais du convertisseur de fréquence (27) et fonctionne comme un moteur jusqu'à ce que la puissance de la turbine à gaz dépasse la puissance nécessaire à l'accélération de la ligne d'arbres (9), et après que la puissance de la turbine à gaz dépasse la puissance nécessaire à l'accélération de la ligne d'arbres (19), de l'énergie électrique est délivrée au réseau (1) par le biais du convertisseur de fréquence (27).

8. Procédé de démarrage d'une centrale électrique (10) selon la revendication 5, **caractérisé en ce que** le générateur (18), pour amorcer la rotation de la turbine à gaz (2), est alimenté en électricité depuis le réseau (1) par le biais du convertisseur de fréquence (27) et fonctionne comme un moteur jusqu'à ce que la puissance de la turbine à gaz dépasse la puissance nécessaire à l'accélération de la ligne d'arbres (19), et dès que la puissance de la turbine à gaz dépasse la puissance nécessaire à l'accélération de la ligne d'arbres (19) plus une valeur de seuil, de l'énergie électrique est délivrée au réseau (1) par le biais du convertisseur de fréquence (27) .

9. Procédé de démarrage d'une centrale électrique (10) selon l'une des revendications 1 à 8, **caractérisé en ce que** le convertisseur de fréquence (27) est piloté de telle sorte que le générateur, à partir du moment où il est relié au réseau (1), délivre au réseau (1) une énergie électrique qui est égale ou supérieure à un pourcent (1 %) de la puissance nominale de la turbine à gaz (2).

10. Centrale électrique (10) comprenant une turbine à gaz (2) pourvue d'une soupape de décharge (47) destinée à décharger de l'air depuis le compresseur (13) lors du démarrage de la turbine à gaz (2), un générateur (18) couplé à la turbine à gaz (2) et un convertisseur de fréquence (27) qui peut être relié à un réseau électrique (1), **caractérisée en ce que** le convertisseur de fréquence (27) comporte un régulateur (31) qui, lors du démarrage de la centrale électrique (10), après la fermeture de la soupape de décharge (47) et avant que la vitesse de rotation nominale de la turbine à gaz (2) soit atteinte, pilote le convertisseur de fréquence (27) de telle sorte qu'il génère un courant de sortie ayant la fréquence nominale afin de relier le générateur (18) au réseau électrique (1) et afin de délivrer de l'énergie électrique au réseau électrique (1) avant que la vitesse de rotation nominale de la turbine à gaz soit atteinte, l'accélération de la turbine à gaz étant régulée par la régulation de l'énergie délivrée au réseau (1) dès que le générateur (18) délivre de l'énergie électrique au réseau (1) par le biais du convertisseur de fréquence (27).

11. Centrale électrique (10) selon la revendication 10, **caractérisée en ce qu'**un transformateur élévateur de tension (3) est disposé entre le convertisseur de fréquence (27) et le réseau (1) .

12. Centrale électrique (10) selon la revendication 10, **caractérisée en ce qu'**un commutateur de puissance de générateur (6), un transformateur élévateur de tension (3) et un transformateur à haute tension de réseau (21) destiné à délivrer de l'énergie au réseau (1) sont disposés entre le convertisseur de fréquence (27) et le réseau (1) et, en parallèle avec ceux-ci, sont disposés un commutateur de puissance de générateur (6), un transformateur de démarrage (4) et un commutateur de démarrage (26) servant à prélever de l'énergie pour le démarrage de la turbine à gaz (2).
